# EUROPEAN PATENT SPECIFICATION

(11) **EP 3 313 610 B1**
(45) Date of publication and mention of the grant of the patent: **29.07.2020**
(21) Application number: 16814813.8
(22) Date of filing: 22.06.2016
(51) Int. Cl.: B23Q 11/10, F01P 11/08, F16N 39/02

(54) **A LUBRICATION AND COOLING DEVICE AND A METHOD FOR LUBRICATING AND COOLING A WORK PIECE**
SCHMIER- UND KÜHLVORRICHTUNG UND VERFAHREN ZUR SCHMIERUNG UND KÜHLUNG EINES WERKSTÜCKS
DISPOSITIF DE LUBRIFICATION ET DE REFROIDISSEMENT ET PROCÉDÉ POUR LUBRIFIER ET REFROIDIR UNE PIÈCE

(30) Priority: 25.06.2015 SE 1550877
(43) Date of publication of application: 02.05.2018
(73) Proprietor: Accu-Svenska AB, 721 32 Västerås (SE)
(72) Inventor: MARTINOVIC, Milan, 724 81 Västerås (SE); BIHAGEN, Sverker, 725 97 Västerås (SE); PUSAVEC, Franci, 4290 Trzic (SI); KRAJNIK, Peter, 414 67 Göteborg (SE); KOPAC, Janez, 01230 Domzale (SI)
(74) Representative: Zacco Sweden AB
(86) International application number: PCT/SE2016/050607
(87) International publication number: WO 2016/209151

(56) References cited:
- CN-U- 203 879 711
- KR-A- 20130 061 934
- SU-A1- 1 423 350
- US-A- 5 549 177
- US-A- 5 901 623
- US-A- 6 067 804
- US-A1- 2009 320 655
- US-A1- 2010 254 772
- US-A1- 2010 272 530

## Description

### TECHNICAL FIELD

The present invention relates to a lubrication and cooling device according to the preamble of claim 1 and a method for lubricating and cooling a workpiece or a process by using such a device according to the preamble of claim 17.

### BACKGROUND

Many industrial processes, and especially machining processes such as turning, drilling, milling and grinding, and also forming processes such as stamping, forging, extruding, rolling, punching, bending and drawing, generate large mechanical and thermal loads on the tools used for such processes. At high processing speeds the thermal loads have a direct impact on both the tools and the end result of the products being processed and if not controlled, may have detrimental effects on the entire process and product. For avoiding excessive thermal and mechanical loads, different types of processing fluids are used to cool and lubricate the process. A processing fluid is a fluid designed for cooling and lubricating metalworking and machining processes. The term processing fluid may be viewed as the collective term for various fluids, depending on the context and on which type of processing fluid is being considered. It may be referred to as cutting fluid, cutting oil, cutting compound, coolant, lubricant, lubricant fluid, or cooling fluid. There are various kinds of processing fluids, which include oils, oil-water emulsions, synthetic and semi-synthetic oils, pastes, gels, aerosols, and air or other gases. They may be made from petroleum distillates, animal fats, plant oils, water and air. In industrial processes on a large scale, oil-based emulsions are often used. The flow of processing fluid may vary depending on the process at hand, but often a large quantity is used to cool and lubricate the process as much as possible to increase the speed of the process.

However, due to machining performance and sustainability trends, more and more emphasize is put on minimum quantity lubrication (MQL). MQL systems use aerosols where oil droplets are delivered, with pressurized air, to the cutting zone. Even though MQL has promising performance when it comes to lubrication, it has low cooling capability. An alternative to oil-based emulsions is to use liquid nitrogen, which has an evaporation point at -196°C, as a cooling lubricant fluid (cryogenic machining). The cooling mechanisms in cryogenic machining are excellent, however lubrication is limited. A problem that is faced in this case is that nitrogen, when delivered, immediately evaporates and from a tribology point of view the tool and machining surface behaves close to dry conditions, and thus provides a limited lubrication to the process.

WO9605008 discloses a cryogenic machining device for cryogenically cooling a cutting tool which can be used for cutting a metal work piece. The device comprises a cutting tool with a rake face and a flank face, a chip breaker arranged adjacent to the rake face and a nozzle for directing a cryogenic fluid onto the rake face and under chips cut from the work piece. The device provides good cooling to the machined surface with the closely provided fluid channel. However, the device has drawbacks as described above with cryogenic machining providing good cooling but a limited lubrication to the machined surface. The device is also rather limited in its usage as the channel providing the cryogenic fluid is arranged directly on to the tool and may not be suitable for all types of machining processes.

US8303220 discloses a device for axial delivery of cryogenic fluid through a machine spindle. The device is meant to serve as a cooling system combined with a rotating machining tool. The system supplies a cryogen such as liquid nitrogen (LN₂) to the machined surface through the axial path of a machine tool spindle and to the cutting tool. The device and system provides good cooling through the use of LN₂. However, as the nitrogen evaporates so fast the machined surface is provided with limited lubrication as stated above. Depending on which cryogen the system uses, a potential interaction between the cryogen and the machined detail must be taken into consideration. Some metals may react in a non-favorable way when exposed to certain gases, which may make the system less flexible, if used for different materials. The cryogenic fluid when evaporated to gas may also be something to take in consideration, as gas flowing freely into the environment is not always preferable in terms of environmental and health perspectives.

US6067804 discloses a device and method for cooling of oil used to lubricate bearings prior to its delivery to the bearing surfaces. The cooling of oil is accomplished by flowing hot oil into heat exchange contact with liquid refrigerant.

There is thus a need for an improved lubrication and cooling device for machining processes to overcome the problems and drawback of prior art.

### SUMMARY OF THE INVENTION

The object of the present invention is to provide said lubrication and cooling with using as small quantities of lubricant fluid as possible. A further object of the invention is also to provide a device where the temperature of the provided lubricant fluid can be controlled without changing the flow of lubricant fluid. An even further object of the invention is to provide a method for lubricating and cooling a workpiece or a process with such a device.

These objects are achieved by the lubrication and cooling device as defined by claim 1 and the method as defined by claim 17. Embodiments of the present invention are defined by the dependent claims.

The lubrication and cooling device comprises a cooling fluid device, comprising a first channel, which is connected to a first inlet port. The device further comprises a lubrication device, comprising a second channel, which is connected to a second inlet port. The lubrication and cooling device even further comprises a heat exchanger, comprising a cooling circuit and a lubricant delivery circuit. The cooling circuit comprises said first inlet port and a first outlet port, and the cooling circuit is arranged to receive a cooling fluid, which cooling fluid flows through the cooling circuit, from the first inlet port to the first outlet port. The lubricant circuit comprises said second inlet port and a second outlet port, and the lubricant delivery circuit is arranged to receive a lubricant fluid, which lubricant fluid flows through the lubricant delivery circuit, from the second inlet port to the second outlet port. The heat exchanger is arranged to cool the lubricant fluid by means of the cooling fluid, wherein the cooling fluid is a cryogenic fluid.

This has the advantage that where both lubrication and cooling are needed for any type of system which may so require, both the lubrication and cooling needs are met with a system where the lubricant and coolant may be chosen individually to meet the requirements of lubrication and temperature as the two fluids do not come in contact with each other, they only interact by means of heat transfer provided via the heat exchanger. A process in need of both lubrication and cooling will therefore have both these requirements met in a very efficient way when using the present invention. As the device according to the present invention provides both lubrication and cooling from the same output source, the space needed for these assisting means may be reduced which is beneficial when setting up a process. The cooling fluid being a cryogenic fluid has the advantage that the cooling effect of the cooling fluid may be very high due to the low temperature of the cryogenic cooling fluid. This in turn promotes to lower the temperature of the lubricant fluid to very low temperatures which ensures a very efficient cooling when using the lubrication and cooling device while still providing excellent lubrication.

According to one embodiment of the present invention the device further comprises at least one nozzle from which the lubricant fluid is delivered.

This has the advantage that both the lubrication and cooling may be provided for a system in a controlled and efficient way. With an external nozzle design the lubrication and cooling may be provided in a wide variety of ways to meet the needs of the system or process where lubrication and cooling is needed. For very detailed processes and/or where small products are being processed, a nozzle assists to provide the working area with lubricant and coolant, as a nozzle is easy to control and/or direct to a certain area where lubrication add cooling are needed. This in turn lowers the risk of defaults in the end-product or the tool being used which could occur due to a less than needed amount of said fluids.

According to another embodiment of the present invention, the cooling circuit is arranged in fluid communication with a flow regulation valve.

This has the advantage that the heat transfer within the heat exchanger and the corresponding temperature change of the lubricant fluid can be controlled by regulating the flow of cooling fluid within the cooling circuit of the heat exchanger. This allows for controlling the temperature of the lubricant fluid without affecting the flow rate of said lubricant fluid at the same time. This is very beneficial as there is therefore no unnecessary waste of lubricant fluid due to an increased flow of said fluid to increase the cooling effect it has on the process system.

According to yet another embodiment of the present invention, the first outlet port of the cooling circuit is connected to a cooling fluid recovery tank, which cooling fluid recovery tank is arranged to recover the used cooling fluid.

This is advantageous both form an economical and an environmental perspective. By collecting the cooling fluid after the cooling of the lubricant fluid has occurred in the heat exchanger the cooling fluid may be used in other applications and not go to waste. The cooling fluid when recovered in the recovery tank may have other uses in the same manufacturing facility, or it may be sold. This is also very environmental friendly as the cooling fluid does not get delivered straight out into the atmosphere which could be environmentally unfriendly depending on the cooling fluid used.

According to an even further embodiment of the present invention, the cryogenic fluid is liquid nitrogen.

This has the advantage that the cooling effect of the cooling fluid can be very high due to the low temperature of the cooling fluid, which is achievable with nitrogen. This in turn promotes to lower the temperature of the lubricant fluid to very low temperatures which ensures a very efficient cooling when using the lubrication and cooling device, by using a very common substance as cooling fluid. Nitrogen have many uses in different areas of industries, both in liquid and gas form, which creates a further advantage when the recovered cooling fluid is recovered within the cooling fluid recovery tank.

According to yet another embodiment of the present invention, the cooling circuit of the heat exchanger is arranged to receive a cryogenic fluid having a temperature in the range of about -50 to about -200°C.

This has the advantage that the cooling effect of the cooling fluid when flowing through the heat exchanger will be very high due to the low temperature which will promote a fast and efficient cooling of the lubricant fluid. It is further advantageous that the temperature range is wide so that several different kinds of cryogenic fluids may be used as cooling fluids.

According to an even further embodiment of the present invention, the temperature of lubricant fluid is in the range of about 0 to about -70°C when the lubricant fluid is exiting the second outlet port.

This has the advantage that the process being lubricated and cooled may be performed at very high material processing speeds as the temperature of the lubricant fluid is low. The lower the temperature of the lubricant fluid, the more it cools the process it is meant to lubricate and cool, which in turn means the process may be performed at a higher speed which cuts down on process time. A lower process time will in turn lead to a more cost effective process.

According to yet another embodiment of the present invention, the lubrication and cooling device is arranged to be used in a machining process.

According to a further embodiment of the present invention, the lubrication and cooling device is arranged to be used in a forming process.

The advantage for these two embodiments is that the lubrication and cooling device is useful for several very common industrial processes. The usage of the device is hence beneficial for a wide array of companies and manufacturing facilities across the industrial world. A further advantage is that the same device may be used for a multiple of different kind of processes making the device very cost efficient for industrial use.

According to an embodiment of the present invention, the lubricant fluid is an aerosol comprising an aerosol carrier and a lubricant liquid.

This has the advantage that the total amount of lubricant fluid needed for a process can be lowered compared to using only said fluid in fluid form. This has benefits from both an economical as well as an environmental perspective.

According to yet another embodiment of the present invention, the aerosol carrier comprises a gas, preferably one of O₂, air, CO₂, N₂ and Ar.

This has the advantage that a specific gas may be picked for a particular application. Depending on the process where the lubrication and cooling is needed, the requirements for the ingoing elements may differ. If the work piece of a process where the invention is used is of a particular material, which is sensitive to a certain gas, another gas which it is not sensitive to may be used instead.

According to a further embodiment of the present invention, the lubricant liquid comprises oil.

This has the advantage that the device can deliver a lubricant fluid with natural lubricating characteristics as oil is a common lubricant in industrial applications. Oil is furthermore not prone to cause corrosion, which is beneficial if the lubrication and cooling needed are for processes performed on metals.

According to yet a further embodiment of the present invention, the lubricant liquid comprises a fatty alcohol.

This has the advantage that the device can provide the desired lubrication and cooling using a very cheap and common substance, which is easy and cost effective to produce. Alcohol may further be advantageous for certain applications where moisture remaining on the tool and/or work piece being processed might be harmful or not desirable for said processes.

According to an even further embodiment of the present invention, the lubricant fluid device is an aerosol generator which provides the aerosol to the heat exchanger, the aerosol generator comprising; a lubricant fluid reservoir, an aerosol carrier reservoir, a mixing chamber, and a lubricant flow regulator.

This has the advantage that the aerosol may be generated at room temperature in the aerosol generator and then provided to the lubricant delivery circuit in the heat exchanger to be cooled in temperature within the heat exchanger. This is advantageous as existing and reliable technology may be used for the step of generating the aerosol. A further advantage with using an aerosol generator is that the existing flow regulator of the aerosol generator may be used to regulate the flow of lubricant provided to the system.

According to an embodiment of the present invention, the second outlet is connected to a single-channel delivery channel, which is connected to the at least one nozzle, through which the cooled aerosol is provided.

This has the advantage that the delivery of both lubrication and cooling is provided in a very space effective way. The single-channel delivery is also beneficial as it is easy to manufacture.

According to another embodiment of the present invention, the lubricant delivery circuit of the heat exchanger further comprises a first portion and a second portion, wherein first portion is arranged to receive the lubricant liquid, and the second portion is arranged to receive the aerosol carrier, and wherein the lubricant liquid and aerosol carrier are mixed together to an aerosol within the at least one nozzle, through which the cooled aerosol is provided.

This has the advantage that the lubrication and cooling device may be used without an aerosol generator as the mixing of the lubricant liquid and the aerosol carrier occurs within the nozzle.

According to yet another embodiment of the invention a method for lubricating and cooling a workpiece or a process is provided. The method is performed by using a lubrication and cooling device, comprising; a cooling fluid device, which comprises a first channel, which is connected to a first inlet port, and a lubricant fluid device, which comprises a second channel, which is connected to a second inlet port. The lubrication and cooling device further comprises a heat exchanger, which comprises: a cooling circuit and a lubricant delivery circuit, wherein the cooling circuit comprises said first inlet port and a first outlet port, and the cooling circuit is arranged to receive a cooling fluid, which cooling fluid flows through the cooling circuit, from the first inlet port to the first outlet port. The lubricant delivery circuit comprises said second inlet port and a second outlet port, and the lubricant delivery circuit is arranged to receive a lubricant fluid, which lubricant fluid flows through the lubricant delivery circuit, from the second inlet port to the second outlet port, wherein the heat exchanger is arranged to cool the lubricant fluid by means of the cooling fluid. The method comprises the steps of: a) cooling the lubricant fluid within the lubricant delivery circuit by means of the cooling fluid using the heat exchanger wherein the cooling fluid is a cryogenic fluid, and b) providing the cooled lubricant fluid to the workpiece or process being lubricated and cooled.

This has the advantage that a method is provided where both lubrication and cooling may be provided for a workpiece or a process. Both the lubrication and cooling needs are thereby met with a method where the lubricant and coolant may be chosen individually to meet the requirements of lubrication and temperature as the two fluids do not come in contact with each other, they only interact by means of heat transfer provided via the heat exchanger. A process or a workpiece in need of both lubrication and cooling will therefore have both these requirements met in a very efficient way when using the method according to the present invention. As the device used for the method according to the present invention provides both lubrication and cooling from the same output source, the space needed for these assisting means may be reduced which is beneficial when setting up a process. The cooling fluid being a cryogenic fluid has the advantage that the cooling effect of the cooling fluid may be very high due to the low temperature of the cryogenic cooling fluid. This in turn promotes to lower the temperature of the lubricant fluid to very low temperatures which ensures a very efficient cooling while still providing good lubrication when using the method according to the invention.

According to a further embodiment of the invention the lubricant fluid used in the lubrication and cooling device is an aerosol comprising an aerosol carrier and a lubricant liquid.

This has the advantage that the total amount of lubricant fluid needed when using the method may be reduced compared to using only said fluid in pure fluid form. This has benefits from both an economical as well as an environmental perspective. A method is thereby provided which achieves both lubrication and cooling with using low amounts of lubricant fluids which exhibits very low temperatures.

### BRIEF DESCRIPTION OF DRAWINGS

Preferred embodiments of the invention will be further described with reference to the accompanying drawings.
- Figure 1: illustrates a schematic view of a first embodiment of the present invention.
- Figure 2: illustrates a schematic view of a second embodiment of the present invention.
- Figure 3: illustrates a schematic view of a third embodiment of the present invention.
- Figure 4: illustrates a schematic view of a fourth embodiment of the present invention.
- Figure 5: illustrates a schematic view of a fifth embodiment of the present invention.
- Figure 6: illustrates a flowchart of a method for lubricating and cooling a workpiece or a process according to the present invention.

### DETAILED DESCRIPTION OF PREFERRED EMBODIMENTS OF THE INVENTION

Embodiments of the invention will herein be described in more detail with reference to the accompanying drawings. The drawings should not be considered drawn to scale as some features may be exaggerated in order to more clearly illustrate the invention.

Furthermore, the invention is not limited to the specific embodiments shown in the drawings and discussed below, but may be varied within the scope of the appended claims.

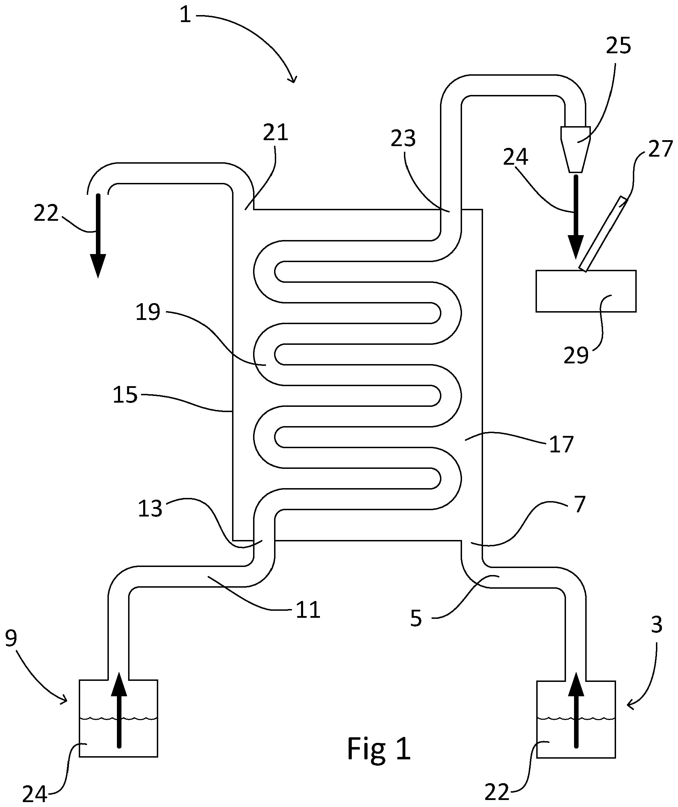

Figure 1 schematically illustrates a first embodiment of the present invention, which is a lubrication and cooling device 1 comprising a cooling fluid device 3, which comprises a first channel 5, which is connected to a first inlet port 7. The lubrication and cooling device 1 further comprises a lubricant fluid device 9, which comprises a second channel 11, which is connected to a second inlet port 13. Furthermore, the lubrication and cooling device 1 comprises a heat exchanger 15, which comprises a cooling circuit 17 and a lubricant delivery circuit 19. The cooling circuit 17 comprises said first inlet port 7 and a first outlet port 21, and the cooling circuit 17 is arranged to receive a cooling fluid 22, which cooling fluid 22 flows through the cooling circuit 17, from the first inlet port 7 to the first outlet port 21. The lubricant delivery circuit 19 comprises said second inlet port 13 and a second outlet port 23, and the lubricant delivery circuit 19 is arranged to receive a lubricant fluid 24, which lubricant fluid24 flows through the lubricant delivery circuit 19, from the second inlet port 13 to the second outlet port 23. The heat exchanger 15 is arranged to cool the lubricant fluid 24 by means of the cooling fluid 22. The lubrication and cooling device 1 in this embodiment of the invention further comprises a nozzle 25 which provides the lubricant fluid 24 to a tool 27 and a work piece 29, wherein the tool 27 is processing the work piece 29.

The lubrication and cooling device 1 is adapted to provide a cooled lubricant to a tool 27 and a work piece 29, wherein the tool 27 is processing the work piece 29 in any sort of process where lubrication and cooling is needed or wanted to achieve a better and/or faster result is said process. Said processes may be machining processes such as drilling, turning, milling, bending, grinding, or other, being performed on a work piece 29 of metal, wood, polymeric material, ceramics, or other. Said process may also be a forming process such as stamping, forging, extruding, rolling, punching, bending and drawing. Any type of process performed with a tool 27 interacting with the mass of a work piece 29 in a moving fashion may need lubrication and/or cooling to achieve the desired results and/or increase the lifespan of the tool 27 being used. The tool 27 may be a machining tool or a forming tool.

To achieve the desired lubrication and cooling with the lubrication and cooling device 1, a cooling fluid 22 is provided to the first channel 5 from the cooling fluid device 3. The cooling fluid device 3 may be any suitable container or reservoir which can provide a flow of said cooling fluid 22 to said first channel 5. Simultaneously a lubricant fluid 24 is provided to the second channel 11 from the lubricant fluid device 9. The lubricant fluid device 9 may be any suitable container or reservoir which can provide a flow of said lubricant fluid to said second channel 11. Provided that the cooling fluid 22 has a lower temperature than the lubricant fluid 24, the temperature of the lubricant fluid 24 will be lowered when the two fluids flows through the cooling circuit 17 and the lubricant delivery circuit 19 of the heat exchanger 15. The channels 5, 11 of the lubrication and cooling device 1 may be any tubing or piping suitable for the pressures and temperatures of the fluids they will transport. The lubricant fluid 24 provided to the lubrication and cooling device 1 may be oils, oil-water emulsions, synthetic and semi-synthetic oils, pastes, gels, aerosols or other. The lubricant fluid 24 may also comprise additives such as nano-particles. Such nano-particles may be of low friction materials such as graphite.

The heat exchanger 15 may be any known type of heat exchanger such as a shell and tube heat exchanger, a plate heat exchanger, a plate and shell heat exchanger, a plate fin heat exchanger or any other type of heat exchanger with the ability to transfer heat from one fluid to another. Any type of flow in the heat exchanger may be considered, such as parallel-flow, counter-flow and crossflow heat exchangers. After flowing through their respective circuits 17, 19 in the heat exchanger 15, the cooling fluid 22 will exit the heat exchanger through the first outlet port 21 and the lubricant fluid 24 will exit the heat exchanger 15 at the second outlet port 23. The cooled lubricant fluid 24 is then provided to the tool 27 and work piece 29 of the process at hand and the cooling fluid 22 is exposed elsewhere. As the lubricant fluid 24 never interacts directly with the cooling fluid 22, only by means of the heat exchanger 15, the choice of cooling fluid 22 may be selected without regard to an interaction of cooling fluid 22 and tool 27 and work piece 29.

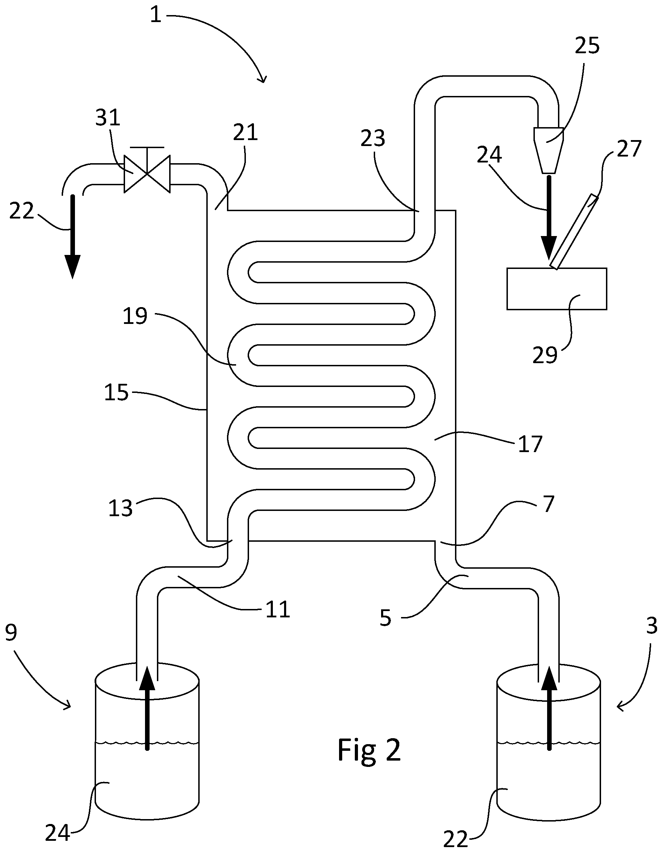

Figure 2 schematically illustrates a second embodiment of the present invention. In this embodiment of the invention the lubricant fluid device 9 is providing the heat exchanger 15 with a steady flow of lubricant fluid 24. This steady flow of lubricant fluid 24 may be provided by means of an open valve or a pressurised container accompanied to the lubricant fluid source. This embodiment of the invention further comprises a flow regulation valve 31 arranged in fluid communication with the cooling circuit 17. The flow regulation valve 31 may be any type of known valve which can be used to regulate flow, such as a poppet valve or similar. By controlling the flow rate of the cooling fluid 22 by means of the flow regulation valve 31 and thus the amount of cooling fluid 22 flowing through the heat exchanger 15, the temperature change of the lubricant fluid 24 may be controlled. Therefore the amount of lubrication provided by the device 1 may be held constant while still controlling the cooling provided by the device 1. This results in a device which is adapted to not waste unnecessary amounts of lubricant fluid 24 when extra cooling is needed, which could be the case for conventional lubrication and cooling devices or systems.

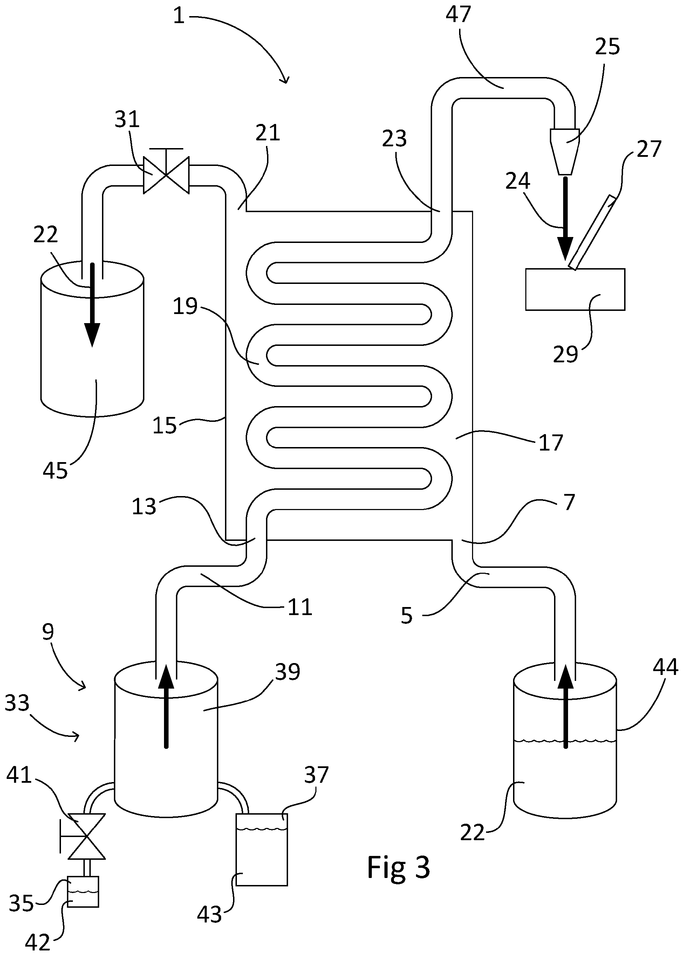

Figure 3 schematically illustrates a third embodiment of the present invention. In this third embodiment of the invention, the lubricant fluid device 9 is an aerosol generator 33 comprising a lubricant liquid reservoir 35, an aerosol carrier reservoir 37, a mixing chamber 39, and a lubricant flow regulator 41. The aerosol generator 33 herein provides the heat exchanger 15 with lubricant fluid 24 in the form of an aerosol. By using an aerosol as a lubricant fluid 24, wherein the aerosol comprises a lubricant liquid 42 and an aerosol carrier 43, the amount of lubricant liquid 42 used is drastically lowered compared to if the lubricant fluid 24 would consist of the lubricant liquid 42 only. By using an aerosol as lubricant fluid 24, the amount of lubricant liquid 42 used and the cost for the process is reduced. Furthermore, the impact on the environment is also reduced as there is less lubricant fluid 24 provided to the process. As lubricant fluids 24 potentially may cause health issues if a person is exposed to, or over-exposed to, certain fluids which may be used as lubricant fluid 24, this risk is also reduced by using an aerosol as a lubricant fluid 24. The amount of lubricant liquid 42 used in the lubrication and cooling device schematically illustrated in figure 3 is controlled by means of the lubricant flow regulator 41 and may be in the range of about 5 ml/h to about 120 ml/h. The lubricant liquid 42 used in the aerosol generator 33 may vary depending on the process and the lubrication needs, however, the lubricant liquid 42 is preferably an oil or oil derivate, an alcohol or a fatty alcohol or similar. Both organic oils such as oil derived from plants, or inorganic mineral oils may be used in the device, but for environmental reasons organic oils such as vegetable oil are preferred. The lubricant liquid 42 may contain additives such as nano-lubricants and/or nano-particles, or other additives. The aerosol carrier 43 used to produce the aerosol in the aerosol generator is preferably a high pressurized gas. Gases suitable to be an aerosol carrier 43 can be gases such as O₂, air, CO₂, N₂ and Ar but other gases may also be possible. The lubricant liquid 42 and the aerosol carrier 43 are mixed in the mixing chamber 39 of the aerosol generator 33 and then provided to the heat exchanger 15 via by means of pressure. The flow of lubricant fluid 24 can therefore be controlled directly by the aerosol generator 33, and the amount of lubricant liquid 42 provided can be controlled by means of the lubricant flow regulator 41.

The embodiment of the invention schematically illustrated in figure 3 further comprises liquid nitrogen (LN₂), which is a cryogenic fluid, as cooling fluid 22, provided to the heat exchanger 15 from a LN₂ storage tank 44. As nitrogen has a boiling point of -195.8°C the low temperature of liquid nitrogen provides excellent cooling of the lubricant fluid 24 within the heat exchanger 15. Other cryogenic fluids may also be used as cooling fluid 22, such as CO₂ and Ar, with boiling points of - 78.5°C and -185.9°C respectively. The lubrication and cooling device 1 is hence designed to use cooling fluids 22 with temperatures in a wide range, from about -50°C to about -200°C to provide an efficient cooling of the lubricant fluid 24. When using a cryogenic fluid as cooling fluid 22 the lubrication and cooling device can produce a cooled lubricant fluid 24 with very low temperatures. The temperature of the lubricant fluid 24 when exiting the second outlet port 13 can be in the range of about 0°C to about -70°C. For any set flow of lubricant fluid 24 provided from the aerosol generator 33, the decrease in temperature of said fluid can be controlled using the flow regulation valve 31 of the cooling circuit 17 to regulate how much cooling fluid 22 is provided to the heat exchanger 15.

Said third embodiment of the invention further comprises a cooling fluid recovery tank 45 connected to the first outlet port 21. The cooling fluid recovery tank 45 may be connected to the first outlet port 21 by any type of piping or tubing that can handle the low temperature and high pressure of the nitrogen when it exits from the heat exchanger 15. As the temperature of the nitrogen increases simultaneously as the temperature of the lubricant fluid 24 decreases, the nitrogen will be in gas form when it exits the heat exchanger 15. The nitrogen may then be recovered in the cooling fluid recovery tank 45, which may be any type of sealable and pressure resistant container. The nitrogen may then be re-used in gas form for other processes, such as welding, or be cooled down to liquid form again for later uses in the lubrication and cooling device 1.

This third embodiment of the invention hence utilizes the low temperature of a cryogenic fluid to decrease the temperature of a lubricant fluid 24, in the form of an aerosol, wherein the lubrication and cooling device 1 further comprises a single-channel delivery channel 47, in which the cooled lubricant fluid 24 is transported to the nozzle 25. The term single-channel delivery channel 47 should herein be understood as such that the delivery of both lubrication and cooling is provided in a single channel.

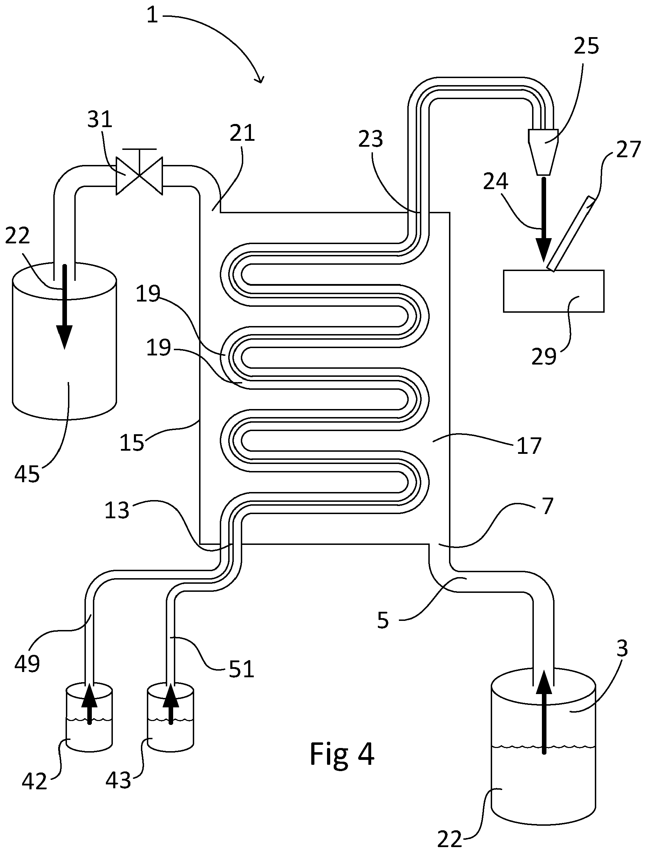

Figure 4 schematically illustrates a fourth embodiment of the present invention. In this embodiment the lubricant delivery circuit 19 of the heat exchanger further comprises a first portion 49 and a second portion 51, wherein the lubricant liquid 42 is arranged to flow through the first portion 49 and the aerosol carrier 43 is arranged to flow through the second portion 51. This embodiment does not comprise an aerosol generator wherein an aerosol is mixed and provided to the heat exchanger. In this embodiment the lubricant liquid 42 and the aerosol carrier 43 are being provided to the first and second portion 49, 51 of the lubricant delivery circuit 19 respectively, and are being cooled individually in the heat exchanger 15 by means of the cooling fluid 22. The first and second portion 49, 51 of the lubricant delivery circuit 19 are in this embodiment two pipes or two tubes, running parallel to each other in the heat exchanger 15. The cooled lubricant liquid 42 and the cooled aerosol carrier 43 are then mixed to an aerosol in the nozzle 25 before being provided to a tool 27 and work piece 29 for which lubrication and cooling is needed. Other designs than the piping or tubing running parallel may be also considered. An advantage with a parallel piping or tubing is that this type of arrangement is easier to manufacture. But the piping or tubing could run in alternative paths in the heat exchanger 15 as a way to change the relative cooling to the lubricant liquid 42 and the aerosol carrier 43.

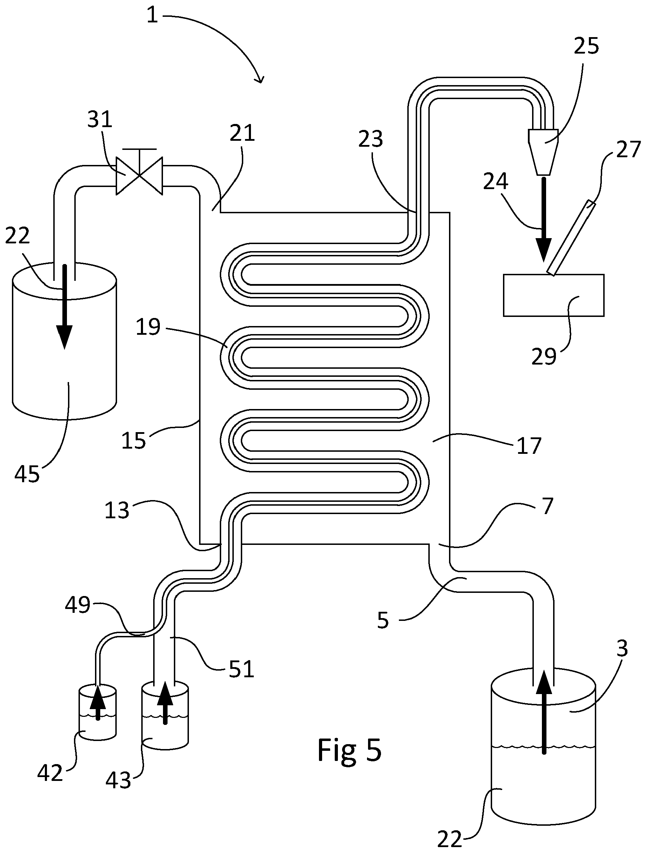

Figure 5 schematically illustrates a view of a fifth embodiment of the present invention. This embodiment is similar to the forth embodiment except for that in this embodiment the first portion 49 of the lubricant delivery circuit 19 is positioned within the second portion 51 of the lubricant delivery circuit 19. As in the fourth embodiment, the lubricant liquid 42 and the aerosol carrier 43 are cooled individually in the heat exchanger 15, by means of the cooling fluid 22, before being mixed into an aerosol in the nozzle 25. An advantage with having the first portion 49 of the lubricant delivery circuit 19 positioned within the second portion 51 of the lubricant delivery circuit 19 is that the aerosol carrier 43 will surround the lubricant liquid 42 when the aerosol is about to be mixed, which will increase the exposure of aerosol carrier 43 on the lubricant liquid 42 which is beneficial when creating the aerosol.

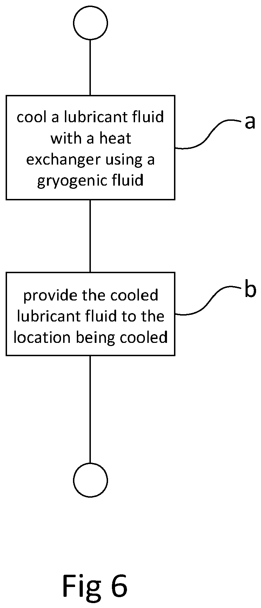

Figure 6 illustrates a flowchart of a method for lubricating and cooling a workpiece or a process according to the present invention. The method is performed by using a lubrication and cooling device 1, the device comprising; a cooling fluid device 3, which comprises a first channel 5, which is connected to a first inlet port 7, and a lubricant fluid device 9, which comprises a second channel 11, which is connected to a second inlet port 13. The lubrication and cooling device 1 further comprises a heat exchanger 15, which comprises: a cooling circuit 17 and a lubricant delivery circuit 19, wherein the cooling circuit 17 comprises said first inlet port 7 and a first outlet port 21, and the cooling circuit 17 is arranged to receive a cooling fluid 22, which cooling fluid 22 flows through the cooling circuit 17, from the first inlet port 7 to the first outlet port 21, the lubricant delivery circuit 19 comprises said second inlet port 13 and a second outlet port 23, and the lubricant delivery circuit 19 is arranged to receive a lubricant fluid 24, which lubricant fluid 24 flows through the lubricant delivery circuit 19, from the second inlet port 13 to the second outlet port 23, wherein the heat exchanger is arranged to cool the lubricant fluid 24 by means of the cooling fluid 22. The method comprises the steps of: a) cooling the lubricant fluid 24 within the lubricant delivery circuit 19 by means of the cooling fluid 22 using the heat exchanger 15 wherein the cooling fluid 22 is a cryogenic fluid, and b) providing the cooled lubricant fluid 24 to the workpiece or process being lubricated and cooled. Thereby a method is provided which method may cool a lubricant fluid 24 to very low temperatures by means of using a cryogenic fluid as cooling fluid 22. Furthermore, a method is provided which may cool said lubricant fluid 24 in a controlled manner by means of using a heat exchanger 15. This prevent issues such as freezing of the lubricant fluid 24 which could occur if the lubricant fluid 24 would be subjected to exposure of a cryogenic fluid directly, without using a heat exchanger 15. Hence, a very effective lubrication and cooling is provided to the workpiece or process being cooled by means of the method according to the invention. Furthermore, the use of a heat exchanger provides an easy way to control the temperature of the lubricant fluid (24) by means of controlling the flow of cooling fluid 22 within the cooling circuit 17. This is easily performed by means of a flow regulation valve 31 arranged on the cooling circuit 17. The method according to the invention may therefore comprise a step to control adjustment of the temperature of the lubricant fluid 24 by means of a flow regulation valve 31, which adjusts the flow of cooling fluid 22 within the cooling circuit 17 of the heat exchanger 15. The method according to the invention may be performed by using various types of lubricant fluids 24 such as oils, fatty alcohols and similar. The method may further also be performed by using an aerosol comprising an aerosol carrier 43 and a lubricant liquid 42 as lubricant fluid 24. The lubricant fluid device 9 may be an aerosol generator 33 to provide such an aerosol to the heat exchanger 15 in an easy manner. By using an aerosol as lubricant fluid 24 very small amounts of lubricant fluid 24 is needed to achieve efficient lubrication. This provides a method which is very cost effective and environment friendly as less lubricant fluid 24 is wasted as excess fluid.

The invention is not limited to the specific embodiments presented. Combinations of features between different embodiments are possible. Accordingly, the drawings and the description thereto are to be regarded as illustrative in nature, and not restrictive.

## Claims

1. Lubrication and cooling device (1), comprising; a cooling fluid device (3), which comprises a first channel (5) connected to a first inlet port (7) and a cooling fluid (22), and a lubricant fluid device (9), which comprises a second channel (11), which is connected to a second inlet port (13), a heat exchanger (15), which comprises: a cooling circuit (17) and a lubricant delivery circuit (19), wherein the cooling circuit (17) comprises said first inlet port (7) and a first outlet port (21), and the cooling circuit (17) is arranged to receive the cooling fluid (22), which cooling fluid (22) flows through the cooling circuit (17), from the first inlet port (7) to the first outlet port (21), the lubricant delivery circuit (19) comprises said second inlet port (13) and a second outlet port (23), and the lubricant delivery circuit (19) is arranged to receive a lubricant fluid (24), which lubricant fluid (24) flows through the lubricant delivery circuit (19), from the second inlet port (13) to the second outlet port (23), wherein the heat exchanger (15) is arranged to cool the lubricant fluid (24) by means of the cooling fluid (22),
**characterized in that** the cooling fluid (22) is a cryogenic fluid with a temperature in a range from about -50°C to about -200°C.

2. Lubrication and cooling device (1) according to claim 1, wherein the device further comprises at least one nozzle (25) from which the lubricant fluid (24) is delivered.

3. Lubrication and cooling device (1) according to any of the preceding claims, wherein the cooling circuit (17) is arranged in fluid communication with a flow regulation valve (31).

4. Lubrication and cooling device (1) according to any of the preceding claims, wherein the first outlet port (21) of the cooling circuit (17) is connected to a cooling fluid recovery tank (45), which cooling fluid recovery tank (45) is arranged to recover the used cooling fluid (22).

5. Lubrication and cooling device (1) according to claim 1, wherein the cryogenic fluid is liquid nitrogen.

6. Lubrication and cooling device (1) according to claim 1, wherein the cooling circuit (17) of the heat exchanger (15) is arranged to receive a cryogenic fluid having a temperature in the range of about -50 to about -200°C.

7. Lubrication and cooling device (1) according to claim 6, wherein the temperature of lubricant fluid (24) is in the range of about 0 to about -70°C when the lubricant fluid (24) is exiting the second outlet port (23).

8. Lubrication and cooling device (1) according to any of the preceding claims, wherein the lubrication and cooling device (1) is arranged to be used in a machining process.

9. Lubrication and cooling device (1) according to any of claims 1-7, wherein the lubrication and cooling device (1) is arranged to be used in a forming process.

10. Lubrication and cooling device (1) according to any of the preceding claims, wherein the lubricant fluid (24) is an aerosol comprising an aerosol carrier (43) and a lubricant liquid (42).

11. Lubrication and cooling device (1) according to claim 10, wherein the aerosol carrier (43) comprises a gas, preferably one of O₂, air, CO₂, N₂ and Ar.

12. Lubrication and cooling device (1) according to claim 10, wherein the lubricant liquid (42) comprises oil.

13. Lubrication and cooling device (1) according to claim 10, wherein the lubricant liquid (42) comprises a fatty alcohol.

14. Lubrication and cooling device (1) according to any of claims 10-13, wherein the lubricant fluid device (9) is an aerosol generator (33) which provides the aerosol to the heat exchanger (15), the aerosol generator (33) comprising; a lubricant liquid reservoir (35), an aerosol carrier reservoir (37), a mixing chamber (39), and a lubricant flow regulator (41).

15. Lubrication and cooling device (1) according to claim 14, wherein the second outlet is connected to a single-channel delivery channel (47), which is connected to the at least one nozzle (25), through which the cooled aerosol is provided.

16. Lubrication and cooling device (1) according to any of claims 10-13, wherein the lubricant delivery circuit (19) of the heat exchanger further comprises a first portion (49) and a second portion (51), wherein the first portion (49) is arranged to receive the lubricant liquid (42), and the second portion (51) is arranged to receive the aerosol carrier (43), and wherein the lubricant liquid (42) and aerosol carrier (43) are mixed together to an aerosol within the at least one nozzle (25), through which a cooled aerosol is provided.

17. A method for lubricating and cooling a workpiece or a process by using a lubrication and cooling device (1), comprising; a cooling fluid device (3), which comprises a first channel (5) connected to a first inlet port (7) and a cooling fluid (22), and a lubricant fluid device (9), which comprises a second channel (11), which is connected to a second inlet port (13), a heat exchanger (15), which comprises: a cooling circuit (17) and a lubricant delivery circuit (19), wherein the cooling circuit (17) comprises said first inlet port (7) and a first outlet port (21), and the cooling circuit (17) is arranged to receive the cooling fluid (22), which cooling fluid (22) flows through the cooling circuit (17), from the first inlet port (7) to the first outlet port (21), the lubricant delivery circuit (19) comprises said second inlet port (13) and a second outlet port (23), and the lubricant delivery circuit (19) is arranged to receive a lubricant fluid (24), which lubricant fluid (24) flows through the lubricant delivery circuit (19), from the second inlet port (13) to the second outlet port (23), wherein the heat exchanger is arranged to cool the lubricant fluid (24) by means of the cooling fluid (22),
**characterized in that** the method comprises the steps of:
a) cooling the lubricant fluid (24) within the lubricant delivery circuit (19) by means of the cooling fluid (22) using the heat exchanger (15) wherein the cooling fluid (22) is a cryogenic fluid with a temperature in a range from about -50°C to about -200°C, and
b) providing the cooled lubricant fluid (24) to the workpiece or process being lubricated and cooled.

18. The method according to claim 17, wherein the lubricant fluid (24) used in the lubrication and cooling device (1) is an aerosol comprising an aerosol carrier (43) and a lubricant liquid (42).

## Patentansprüche

1. Schmier- und Kühlvorrichtung (1), umfassend; eine Kühlfluidvorrichtung (3), die einen ersten Kanal (5) umfasst, der mit einer ersten Einlassöffnung (7) und einem Kühlfluid (22) verbunden ist, und eine Schmiermittelfluidvorrichtung (9), die einen zweiten Kanal (11) umfasst, der mit einer zweiten Einlassöffnung (13) verbunden ist, einen Wärmetauscher (15), der umfasst: einen Kühlkreislauf (17) und einen Schmiermittelabgabekreislauf (19), wobei der Kühlkreislauf (17) die erste Einlassöffnung (7) und eine erste Auslassöffnung (21) umfasst, und der Kühlkreislauf (17) zur Aufnahme des Kühlfluids (22) ausgelegt ist, welches Kühlfluid (22) durch den Kühlkreislauf (17) von der ersten Einlassöffnung (7) zu der ersten Auslassöffnung (21) strömt, wobei der Schmiermittelabgabekreislauf (19) die zweite Einlassöffnung (13) und eine zweite Auslassöffnung (23) umfasst, und der Schmiermittelabgabekreislauf (19) ausgelegt ist, um ein Schmiermittelfluid (24) aufzunehmen, welches Schmiermittelfluid (24) durch den Schmiermittelabgabekreislauf (19) von der zweiten Einlassöffnung (13) zu der zweiten Auslassöffnung (23) strömt, wobei der Wärmetauscher (15) ausgelegt ist, um das Schmiermittelfluid (24) mittels des Kühlfluids (22) zu kühlen, **dadurch gekennzeichnet, dass** das Kühlfluid (22) ein kryogenes Fluid mit einer Temperatur in einem Bereich von etwa -50°C bis etwa -200°C ist.

2. Schmier- und Kühlvorrichtung (1) nach Anspruch 1, wobei die Vorrichtung ferner mindestens eine Düse (25) umfasst, aus der das Schmiermittelfluid (24) abgegeben wird.

3. Schmier- und Kühlvorrichtung (1) nach einem der vorhergehenden Ansprüche, wobei der Kühlkreislauf (17) in Fluidverbindung mit einem Flussregelventil (31) angeordnet ist.

4. Schmier- und Kühlvorrichtung (1) nach einem der vorhergehenden Ansprüche, wobei die erste Auslassöffnung (21) des Kühlkreislaufs (17) mit einem Kühlfluidrückgewinnungsbehälter (45) verbunden ist, welcher Kühlfluidrückgewinnungsbehälter (45) zur Rückgewinnung des verbrauchten Kühlfluids (22) ausgelegt ist.

5. Schmier- und Kühlvorrichtung (1) nach Anspruch 1, wobei das kryogene Fluid flüssiger Stickstoff ist.

6. Schmier- und Kühlvorrichtung (1) nach Anspruch 1, wobei der Kühlkreislauf (17) des Wärmetauschers (15) zur Aufnahme eines kryogenen Fluids mit einer Temperatur im Bereich von etwa -50 bis etwa -200°C ausgelegt ist.

7. Schmier- und Kühlvorrichtung (1) nach Anspruch 6, wobei die Temperatur des Schmiermittelfluids (24) im Bereich von etwa 0 bis etwa -70°C liegt, wenn das Schmiermittelfluid (24) aus der zweiten Auslassöffnung (23) austritt.

8. Schmier- und Kühlvorrichtung (1) nach einem der vorhergehenden Ansprüche, wobei die Schmier-und Kühlvorrichtung (1) zur Verwendung in einem Bearbeitungsprozess ausgelegt ist.

9. Schmier- und Kühlvorrichtung (1) nach einem der Ansprüche 1 bis 7, wobei die Schmier-und Kühlvorrichtung (1) zur Verwendung in einem Umformprozess ausgelegt ist.

10. Schmier- und Kühlvorrichtung (1) nach einem der vorhergehenden Ansprüche, wobei das Schmiermittelfluid (24) ein einen Aerosolträger (43) und eine Schmiermittelflüssigkeit (42) umfassendes Aerosol ist.

11. Schmier- und Kühlvorrichtung (1) nach Anspruch 10, wobei der Aerosolträger (43) ein Gas, vorzugsweise eines von O₂, Luft, CO₂, N₂ und Ar umfasst.

12. Schmier- und Kühlvorrichtung (1) nach Anspruch 10, wobei die Schmiermittelflüssigkeit (42) Öl umfasst.

13. Schmier- und Kühlvorrichtung (1) nach Anspruch 10, wobei die Schmiermittelflüssigkeit (42) einen Fettalkohol umfasst.

14. Schmier- und Kühlvorrichtung (1) nach einem der Ansprüche 10 bis 13, wobei die Schmiermittelfluidvorrichtung (9) ein Aerosolgenerator (33) ist, der dem Wärmetauscher (15) das Aerosol bereitstellt, wobei der Aerosolgenerator (33) umfasst: ein Schmiermittelflüssigkeitsreservoir (35), ein Aerosolträgerreservoir (37), eine Mischkammer (39) und einen Schmiermittelflussregler (41).

15. Schmier- und Kühlvorrichtung (1) nach Anspruch 14, wobei der zweite Auslass mit einem Einkanal-Abgabekanal (47) verbunden ist, der mit der mindestens einen Düse (25) verbunden ist, durch die das gekühlte Aerosol bereitgestellt wird.

16. Schmier- und Kühlvorrichtung (1) nach einem der Ansprüche 10 bis 13, wobei der Schmiermittelabgabekreislauf (19) des Wärmetauschers ferner einen ersten Abschnitt (49) und einen zweiten Abschnitt (51) umfasst, wobei der erste Abschnitt (49) zur Aufnahme der Schmiermittelflüssigkeit (42) ausgelegt ist, und der zweite Abschnitt (51) zur Aufnahme des Aerosolträgers (43) ausgelegt ist, und wobei die Schmiermittelflüssigkeit (42) und der Aerosolträger (43) zu einem Aerosol innerhalb der zumindest einen Düse (25) zusammengemischt sind, durch die ein gekühltes Aerosol bereitgestellt wird.

17. Verfahren zum Schmieren und Kühlen eines Werkstücks oder eines Prozesses unter Verwendung einer Schmier-und Kühlvorrichtung (1), umfassend; eine Kühlfluidvorrichtung (3), die einen ersten Kanal (5) umfasst, der mit einer ersten Einlassöffnung (7) und einem Kühlfluid (22) verbunden ist, und eine Schmiermittelfluidvorrichtung (9), die einen zweiten Kanal (11) umfasst, der mit einer zweiten Einlassöffnung (13) verbunden ist, einen Wärmetauscher (15), der umfasst: einen Kühlkreislauf (17) und einen Schmiermittelabgabekreislauf (19), wobei der Kühlkreislauf (17) die erste Einlassöffnung (7) und eine erste Auslassöffnung (21) umfasst, und der Kühlkreislauf (17) zur Aufnahme des Kühlfluids (22) ausgelegt ist, welches Kühlfluid (22) durch den Kühlkreislauf (17) von der ersten Einlassöffnung (7) zu der ersten Auslassöffnung (21) strömt, wobei der Schmiermittelabgabekreislauf (19) die zweite Einlassöffnung (13) und eine zweite Auslassöffnung (23) umfasst, und der Schmiermittelabgabekreislauf (19) ausgelegt ist, um ein Schmiermittelfluid (24) aufzunehmen, welches Schmiermittelfluid (24) durch den Schmiermittelabgabekreislauf (19) von der zweiten Einlassöffnung (13) zu der zweiten Auslassöffnung (23) strömt, wobei der Wärmetauscher ausgelegt ist, um das Schmiermittelfluid (24) mittels des Kühlfluids (22) zu kühlen,
**dadurch gekennzeichnet, dass** das Verfahren die folgenden Schritte umfasst:
a) Kühlen des Schmiermittelfluids (24) innerhalb des Schmiermittelabgabekreislaufs (19) mittels des Kühlfluids (22) unter Verwendung des Wärmetauschers (15), wobei das Kühlfluid (22) ein kryogenes Fluid mit einer Temperatur in einem Bereich von etwa - 50°C bis etwa - 200°C ist, und
b) Bereitstellen des gekühlten Schmiermittelfluids (24) an das Werkstück oder den Prozess, das bzw. der geschmiert und gekühlt wird.

18. Verfahren nach Anspruch 17, wobei das in der Schmier- und Kühlvorrichtung (1) verwendete Schmiermittelfluid (24) ein einen Aerosolträger (43) und eine Schmiermittelflüssigkeit (42) umfassendes Aerosol ist.

## Revendications

1. Dispositif de lubrification et de refroidissement (1), comprenant ; un dispositif de fluide de refroidissement (3) qui comprend un premier canal (5) raccordé à un premier orifice d'entrée (7) et un fluide de refroidissement (22), et un dispositif de fluide lubrifiant (9) qui comprend un deuxième canal (11) raccordé à un deuxième orifice d'entrée (13), un échangeur de chaleur (15) qui comprend : un circuit de refroidissement (17) et un circuit de distribution de lubrifiant (19), dans lequel le circuit de refroidissement (17) comprend ledit premier orifice d'entrée (7) et un premier orifice de sortie (21), et le circuit de refroidissement (17) est agencé pour recevoir le fluide de refroidissement (22), ledit fluide de refroidissement (22) s'écoulant à travers le circuit de refroidissement (17) à partir du premier orifice d'entrée (7) vers le premier orifice de sortie (21), le circuit de distribution de lubrifiant (19) comprenant ledit deuxième orifice d'entrée (13) et un deuxième orifice de sortie (23), et le circuit de distribution de lubrifiant (19) étant agencé pour recevoir un fluide lubrifiant (24), ledit fluide lubrifiant (24) s'écoulant à travers le circuit de distribution de lubrifiant (19) à partir du deuxième orifice d'entrée (13) vers le deuxième orifice de sortie (23), dans lequel l'échangeur de chaleur (15) est agencé pour refroidir le fluide lubrifiant (24) au moyen du fluide de refroidissement (22),
**caractérisé en ce que** le fluide de refroidissement (22) est un fluide cryogénique ayant une température dans la plage d'environ -50°C à environ -200°C.

2. Dispositif de lubrification et de refroidissement (1) selon la revendication 1, dans lequel le dispositif comprend en outre au moins une buse (25) à partir de laquelle le fluide lubrifiant (24) est délivré.

3. Dispositif de lubrification et de refroidissement (1) selon l'une quelconque des revendications précédentes, dans lequel le circuit de refroidissement (17) est agencé en communication fluidique avec une vanne de régulation de débit (31).

4. Dispositif de lubrification et de refroidissement (1) selon l'une quelconque des revendications précédentes, dans lequel le premier orifice de sortie (21) du circuit de refroidissement (17) est raccordé à un réservoir de récupération de fluide de refroidissement (45), ledit réservoir de récupération de fluide de refroidissement (45) étant agencé pour récupérer le fluide de refroidissement utilisé (22).

5. Dispositif de lubrification et de refroidissement (1) selon la revendication 1, dans lequel le fluide cryogénique est de l'azote liquide.

6. Dispositif de lubrification et de refroidissement (1) selon la revendication 1, dans lequel le circuit de refroidissement (17) de l'échangeur de chaleur (15) est agencé pour recevoir un fluide cryogénique ayant une température dans la plage d'environ -50 à environ -200°C.

7. Dispositif de lubrification et de refroidissement (1) selon la revendication 6, dans lequel la température du fluide lubrifiant (24) est dans la plage d'environ 0 à environ -70°C lorsque le fluide lubrifiant (24) sort du deuxième orifice de sortie (23).

8. Dispositif de lubrification et de refroidissement (1) selon l'une quelconque des revendications précédentes, dans lequel le dispositif de lubrification et de refroidissement (1) est conçu pour être utilisé dans un processus d'usinage.

9. Dispositif de lubrification et de refroidissement (1) selon l'une quelconque des revendications 1 à 7, dans lequel le dispositif de lubrification et de refroidissement (1) est conçu pour être utilisé dans un processus de formage.

10. Dispositif de lubrification et de refroidissement (1) selon l'une quelconque des revendications précédentes, dans lequel le fluide lubrifiant (24) est un aérosol comprenant un support d'aérosol (43) et un liquide lubrifiant (42).

11. Dispositif de lubrification et de refroidissement (1) selon la revendication 10, dans lequel le support d'aérosol (43) comprend un gaz, de préférence l'un de l'O₂, de l'air, du CO₂, du N₂ et de l'Ar.

12. Dispositif de lubrification et de refroidissement (1) selon la revendication 10, dans lequel le liquide lubrifiant (42) comprend de l'huile.

13. Dispositif de lubrification et de refroidissement (1) selon la revendication 10, dans lequel le liquide lubrifiant (42) comprend un alcool gras.

14. Dispositif de lubrification et de refroidissement (1) selon l'une quelconque des revendications 10 à 13, dans lequel le dispositif de fluide lubrifiant (9) est un générateur d'aérosol (33) qui fournit l'aérosol à l'échangeur de chaleur (15), le générateur d'aérosol (33) comprenant ; un réservoir de liquide lubrifiant (35), un réservoir de support d'aérosol (37), une chambre de mélange (39) et un régulateur de débit de lubrifiant (41).

15. Dispositif de lubrification et de refroidissement (1) selon la revendication 14, dans lequel la deuxième sortie est raccordée à un canal de distribution à canal unique (47) raccordé à l'au moins une buse (25) à travers laquelle l'aérosol refroidi est fourni.

16. Dispositif de lubrification et de refroidissement (1) selon l'une quelconque des revendications 10 à 13, dans lequel le circuit de distribution de lubrifiant (19) de l'échangeur de chaleur comprend en outre une première partie (49) et une deuxième partie (51), la première partie (49) étant agencé pour recevoir le liquide lubrifiant (42), et la deuxième partie (51) étant agencée pour recevoir le support aérosol (43), et dans lequel le liquide lubrifiant (42) et le support aérosol (43) sont mélangés ensemble pour former un aérosol à l'intérieur de l'au moins une buse (25) à travers laquelle un aérosol refroidi est fourni.

17. Procédé pour lubrifier et refroidir une pièce ou un procédé en utilisant un dispositif de lubrification et de refroidissement (1), comprenant ; un dispositif de fluide de refroidissement (3) qui comprend un premier canal (5) raccordé à un premier orifice d'entrée (7) et un fluide de refroidissement (22), et un dispositif de fluide lubrifiant (9) qui comprend un deuxième canal (11) raccordé à un deuxième orifice d'entrée (13), un échangeur de chaleur (15) qui comprend : un circuit de refroidissement (17) et un circuit de distribution de lubrifiant (19), dans lequel le circuit de refroidissement (17) comprend ledit premier orifice d'entrée (7) et un premier orifice de sortie (21), et le circuit de refroidissement (17) est agencé pour recevoir le fluide de refroidissement (22), ledit fluide de refroidissement (22) s'écoulant à travers le circuit de refroidissement (17) à partir du premier orifice d'entrée (7) vers le premier orifice de sortie (21), le circuit de distribution de lubrifiant (19) comprenant ledit deuxième orifice d'entrée (13) et un deuxième orifice de sortie (23), et le circuit de distribution de lubrifiant (19) étant agencé pour recevoir un fluide lubrifiant (24), ledit fluide lubrifiant (24) s'écoulant à travers le circuit de distribution de lubrifiant (19) à partir du deuxième orifice d'entrée (13) vers le deuxième orifice de sortie (23), dans lequel l'échangeur de chaleur est agencé pour refroidir le fluide lubrifiant (24) au moyen du fluide de refroidissement (22),
**caractérisé en ce que** le procédé en outre comprend les étapes consistant à
a) refroidir le fluide lubrifiant (24) à l'intérieur du circuit de distribution de lubrifiant (19) au moyen du fluide de refroidissement (22), en utilisant l'échangeur de chaleur (15), le fluide de refroidissement (22) étant un fluide cryogénique ayant une température dans la plage d'environ -50°C à environ -200°C, et
b) fournir le fluide lubrifiant refroidi (24) à la pièce ou au processus en cours de lubrification et de refroidissement.

18. Procédé selon la revendication 17, dans lequel le fluide lubrifiant (24) utilisé dans le dispositif de lubrification et de refroidissement (1) est un aérosol comprenant un support d'aérosol (43) et un liquide lubrifiant (42).
